# FASCICULE DE BREVET EUROPEEN

(11) **EP 1 038 808 B1**
(45) Date de publication et mention de la délivrance du brevet: **30.05.2001**
(21) Numéro de dépôt: 99440059.6
(22) Date de dépôt: 19.03.1999
(51) Int. Cl.: B65G 47/71

(54) **Convoyeur de récipients, tels que bouteilles pour leur mise en couloirs**
Transportvorrichtung für Behälter, wie z.B. Flaschen zu ihrer Anordnung in Reihen
Conveyor for containers, such as bottles for putting them in lanes

(43) Date de publication de la demande: 27.09.2000
(73) Titulaire: GEBO INDUSTRIES (Société Anonyme), F-67117 Reichstett (FR)
(72) Inventeur: Schoen, Robert, 67540 Ostwald (FR); Huss, Paul, 67170 Geudertheim (FR)
(74) Mandataire: Rhein, Alain

(56) Documents cités:
- FR-A- 2 259 770
- FR-A- 2 667 851
- US-A- 4 944 635

## Description

L'invention concerne un convoyeur de récipients, tels que bouteilles ou similaires, pour leur mise en couloirs, comportant des guides latéraux aptes à orienter lesdits récipients acheminés en vrac depuis un tronçon de convoyeur amont en direction d'un tronçon de convoyeur aval subdivisé en deux couloirs par un guide intermédiaire (voir FR 2667851A).

La présente invention trouvera son application dans le domaine du convoyage de récipients, tels que bouteilles ou similaires.

Dans le cadre d'une installation de traitement de récipients tels que des bouteilles, il est utile, très fréquemment, de répartir dans plusieurs couloirs et en file indienne ces récipients acheminés en vrac par un convoyeur depuis une unité de traitement amont, ceci en vue d'alimenter une unité de traitement aval. Or, une telle mise en couloirs cause d'énormes difficultés dans la mesure où elle est à l'origine de fréquentes interruptions du flux des récipients dues à des blocages se produisant à l'entrée de ces couloirs.

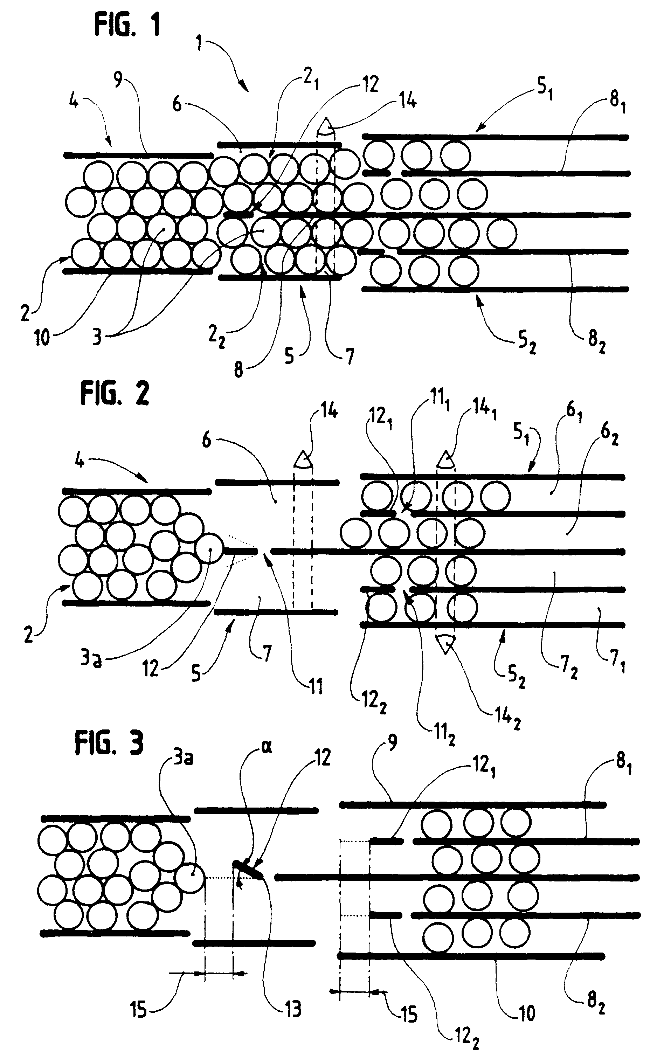

En fait, il convient d'observer que ces récipients sont ralentis au travers de cette mise en couloirs et forment, dans la partie en amont du convoyeur un stock tampon maintenu, latéralement, par des guides. Aussi et comme représenté dans la figure 2, il arrive que, sous l'effet de la pression qui s'exerce entre ces récipients, l'un d'entre eux se présentant au niveau de l'extrémité d'un guide intermédiaire, subdivisant la partie en aval du convoyeur en au moins deux couloirs, soit dans l'impossibilité d'être repoussé dans l'un ou l'autre de ces couloirs en raison d'un équilibre des forces venant s'exercer sur lui. Il en résulte immanquablement, un blocage et, donc, une interruption de l'acheminement des récipients dans les différents couloirs.

A ce propos, l'on remarquera que la largeur du convoyeur, dans sa partie amont, est souvent telle qu'une multitude de récipients sont en mesure de se déplacer de front, de sorte qu'il convient de procéder en plusieurs étapes pour leur mise en couloirs. Si l'on venait à subdiviser un tel convoyeur, immédiatement, en une pluralité de couloirs par l'intermédiaire de plusieurs guides intermédiaires, l'on augmenterait, de manière sensible, le risque d'interruption du flux de récipients. Aussi, il est usuel de dédoubler, une première fois, ce flux de récipients dans deux couloirs définissant, chacun, un convoyeur amont sur lequel ces récipients sont acheminés en vrac en direction d'un convoyeur aval lui-même subdivisé en deux nouveaux couloirs à l'aide d'un guide intermédiaire et ainsi de suite jusqu'à obtenir la mise en ligne de ces récipients dans des couloirs unifilaires.

Il n'empêche que, quelle que soit la méthode employée, à chaque entrée de couloirs, subsiste une probabilité non négligeable de blocage et donc d'interruption du flux de récipients.

Une première solution pour débloquer les récipients immobilisés sur le convoyeur, consiste, bien sûr, à intervenir manuellement, ce qui nécessite la présence constante d'un opérateur sans compter qu'en fonction de la largeur des convoyeurs et de l'encombrement des installations alentour, l'accès au récipient bloqué peut être rendu impossible. De plus, ce récipient qui est la cause d'une interruption d'un flux dans les couloirs est nécessairement soumis à une pression considérable sous l'influence des récipients bloqués en amont, reposant sur un support de transport, tel qu'une chaîne ou similaire, constamment en mouvement. Aussi, retirer un tel récipient représente un danger évident pour cet opérateur.

D'ailleurs, il n'est pas rare que le déblocage résulte de la rupture d'un récipient ce qui entraîne la présence de débris sur le convoyeur susceptibles de faire chuter les récipients suivants.

Pour remédier au problème précité, l'on a imaginé l'implantation, en parallèle d'un convoyeur pour la mise en couloirs de récipients, d'une ligne de rebouclage, sur laquelle peuvent être déviés ces récipients pour éviter leur blocage en amont d'une mise en couloirs.

Les récipients dégagés sur cette ligne de convoyage secondaire sont ensuite réinjectés sur le convoyeur dans sa partie en amont.

L'on comprend, bien évidemment, qu'une telle installation parallèle s'avère particulièrement encombrante et sa mise en place dans une unité d'embouteillage ou similaire est, souvent, impossible.

Une autre solution pour remédier partiellement au problème exposé plus haut consiste à allonger, de manière sensible, le convoyeur sur lequel se produit la mise en couloirs pour réaliser celle-ci plus progressivement. L'on aboutit, évidemment, aux mêmes contraintes que celles liées à une ligne de rebouclage des récipients disposés en parallèle.

On a encore imaginé d'assurer le déblocage d'un flux de récipients immobilisés à l'avant d'un guide intermédiaire de mise en couloirs en commandant le recul de ce guide, en aval du convoyeur, suivant une course déterminée. Il est évident qu'au moment de commander ce recul le flux de récipient est automatiquement décongestionné. Si, dans certains cas, ces récipients adoptent, alors, une disposition mutuelle légèrement différente, leur permettant de reprendre leur progression dans les différents couloirs, très fréquemment ce flux de récipients se contente de parcourir la course correspondant au recul du guide intermédiaire pour se retrouver au devant de ce dernier dans une disposition similaire entraînant, à nouveau, leur blocage.

Dans certaines installations, un guide intermédiaire de mise en couloirs est soumis à un mouvement axial de va et vient continuel. Cela ne répond pas davantage au problème puisque les récipients continuent à venir se bloquer, par moments, en amont de la mise en couloirs. De plus, lorsque intervient un tel blocage, ce guide intermédiaire peut, au moment où il est repoussé en amont du convoyeur, provoquer la rupture d'un récipient immobilisé.

Il a encore été imaginé de soumettre, selon le cas, le convoyeur, les guides latéraux et/ou intermédiaires à un mouvement vibratoire, afin d'éviter ces interruptions de flux de récipients lors de la mise en couloirs. Or, dans la mesure où l'amplitude des vibrations communiquées à l'un et/ou l'autre de ces éléments est nécessairement limitée, cela n'a pas permis de répondre, de manière satisfaisante, au problème.

En fin de compte, si, comme cela ressort de l'exposé de l'état antérieur de la technique, il n'a pas été possible, jusqu'à ce jour, d'éviter que des récipients ne viennent se bloquer en amont d'une mise en couloirs, la présente invention a pour but de proposer une solution qui soit en mesure d'assurer, en cas de détection d'une rupture d'un flux de récipients d'assurer, de manière certaine, leur déblocage.

La présente invention, telle que caractérisée dans les revendications, résout le problème et consiste en un convoyeur de récipients, tels que bouteilles ou analogues, pour leur mise en couloirs comportant des guides latéraux aptes à orienter lesdits récipients, acheminés en vrac depuis un tronçon de convoyeur amont, en direction d'un tronçon de convoyeur aval subdivisé en deux couloirs par un guide intermédiaire, celui-ci comportant à son extrémité orientée en direction du tronçon du convoyeur amont, un volet monté pivotant autour d'un axe vertical et commandé en rotation par des moyens de commande appropriés activés par l'intermédiaire de moyens de détection d'interruption du flux de récipients dans les couloirs en aval du volet.

Il est avantageusement communiqué au guide intermédiaire, simultanément à la commande en rotation du volet ou tout juste avant, un déplacement longitudinal suivant une course déterminée, en aval du convoyeur, en vue de décongestionner le flux de récipients sur le tronçon de convoyeur amont.

En fait, il a été pris en compte qu'un flux de récipients immobilisé à l'avant d'un guide intermédiaire de mise en couloirs, résulte d'un équilibre des forces qui viennent s'exercer sur ces récipients sous l'effet de leur poussée par rapport aux guides latéraux et au guide intermédiaire. Or, en venant commander le basculement du volet situé à l'extrémité d'un tel guide intermédiaire, l'on rompt automatiquement cet équilibre et les récipients sont amenés à adopter une disposition différente d'où résulte, à nouveau, la mise en couloirs. Le volet peut, alors, reprendre, automatiquement, sa disposition initiale, dans le prolongement du guide intermédiaire, jusqu'à la prochaine fois où intervient un blocage.

De plus, en provoquant juste avant ou simultanément à la commande de pivotement du volet, le recul du guide intermédiaire, l'on vient libérer les pressions s'exerçant entre les récipients. Ceci permet d'éviter un déblocage trop brutal de ces récipients, susceptible d'engendrer la chute de certains d'entre eux. En outre, il y a lieu d'observer qu'un récipient en matière semi-rigide, par exemple en matière plastique, immobilisé à hauteur du chant avant du guide intermédiaire, a tendance à se déformer autour de ce dernier sous l'effet des pressions exercées par les autres récipients. Si l'on venait à forcer le mouvement du volet dans ces conditions, cela pourrait entraîner la rupture dudit récipient.

D'autres buts et avantages de la présente invention apparaîtront au cours de la description qui va suivre se rapportant à un exemple de réalisation représenté dans les figures du dessin ci-joint.
- La figure 1 représente, de manière schématisée et en plan, un convoyeur de récipients, tel que des bouteilles ou similaires, pour leur mise en couloirs, celle-ci s'effectuant en plusieurs étapes.
- La figure 2 est une représentation similaire de la figure 1 et illustrant un flux de récipients bloqué en amont d'une mise en couloirs.
- La figure 3 correspond à une représentation similaire à la figure 2, dans une configuration correspondant au déblocage du flux de récipients.

Tel que représenté dans les figures du dessin ci-joint, la présente invention a trait au domaine du convoyage de récipients, tels que des bouteilles ou analogues.

En particulier l'invention concerne un convoyeur 1 destiné à assurer la mise en couloirs d'un flux 2 de récipients 3 et comporte un tronçon de convoyeur amont 4 sur lequel arrive ce flux 2 de récipients 3 pour être acheminé sur un tronçon de convoyeur aval 5 subdivisé en au moins deux couloirs 6, 7, par l'intermédiaire d'un guide intermédiaire 8.

On notera que les récipients 3 sont orientés depuis le tronçon de convoyeur amont 4 vers le tronçon de convoyeur aval 5 par l'intermédiaire de guides latéraux 9, 10.

En fait, comme visible dans ces figures, cette mise en couloirs des récipients 3, consistant, finalement, à les faire progresser, en file indienne, dans une pluralité de couloirs 6₁, 6₂, 7₁, 7₂, peut se faire en plusieurs étapes. Ainsi, l'on vient subdiviser, une première fois, le flux 2 de récipients 3 en deux flux 2₁, 2₂ distincts qui sont, à leur tour, subdivisés et ainsi de suite, jusqu'à pouvoir acheminer un tel flux de récipients subdivisés 2₁, 2₂ dans des couloirs unifilaires 6₁, 6₂ ; 7₁, 7₂.

Finalement, un couloir 6 ; 7 sur un tronçon de convoyeur aval 5 peut, lui-même, définir un tronçon de convoyeur amont, comme l'entend la présente invention, depuis lequel est acheminé un flux de récipients 2₁ ; 2₂ pour leur mise en couloirs 6₁, 6₂ ; 7₁, 7₂ au niveau d'un tronçon de convoyeur en aval 5₁ ; 5₂.

Par ailleurs, lorsqu'un tel tronçon de convoyeur aval 5 vient à définir un tronçon de convoyeur amont pour une nouvelle mise en couloirs, l'un des guides latéraux venant orienter le flux de récipients 2₁, 2₂ en direction du nouveau tronçon de convoyeur aval 5₁ ; 5₂, est nécessairement défini par le guide intermédiaire 8 de la mise en couloirs précédante.

De plus, le guide intermédiaire 8₁ ; 8₂ destiné à subdiviser, dans une seconde étape, un flux de récipients 2₁ ; 2₂, résultant d'une division préalable respectera les caractéristiques, selon l'invention, du guide intermédiaire 8, tel qu'elles vont être décrites à présent.

En particulier, selon l'invention, ce guide intermédiaire 8, venant subdiviser un tronçon de convoyeur aval 5 en deux couloirs 6, 7, ceci dans le but de diviser le flux 2 de récipients 3, comporte à son extrémité 11, orientée en direction dudit tronçon de convoyeur amont 4, un volet 12 monté pivotant autour d'un axe vertical 13 et commandé en rotation par des moyens de commande appropriés (non représentés), tels qu'un vérin, moteur ou similaire.

En particulier, de tels moyens de commande en rotation du volet 12 ont pour but de provoquer le pivotement de celui-ci selon un angle α prédéfini en direction de l'un ou l'autre des couloirs 6, 7, ceci lorsqu'ils sont activés par l'intermédiaire de moyens de détection 14 d'une interruption du flux des récipients 3 dans les couloirs 6, 7 en aval de ce volet 12, comme représenté dans la figure 2.

De tels moyens de détection 14 d'interruption d'un flux des récipients peuvent se présenter sous forme optique ou similaire, voire mécanique.

Ainsi, si, comme représenté dans cette figure 2, le flux 2 de récipients 3 est bloqué sur le tronçon de convoyeur amont 4, cela signifie qu'il se produit un équilibre des forces au niveau de ces récipients 3, d'une part, entre eux et, d'autre part, par rapport aux guides latéraux 9, 10 et l'extrémité 11 du guide intermédiaire 8. Aussi, si l'on vient basculer le volet 12, définissant cette extrémité 11 du guide intermédiaire 8 d'un côté ou de l'autre en direction d'un couloir 6, 7, il s'en suit, automatiquement, un déséquilibre au niveau de ces forces exercées sur lesdits récipients permettant à ces derniers de reprendre leur progression en vue de leur mise en couloirs. Ceci est particulièrement visible dans la figure 3 où l'on voit parfaitement que le récipient 3a, initialement immobilisé par rapport à l'extrémité 11 du guide intermédiaire 8 va pouvoir regagner après basculement du volet 12, le couloir 7.

Avantageusement, ce convoyeur 1 est encore équipé de moyens de commande de recul du guide intermédiaire 8, destinés à repousser celui-ci, selon une course 15, en aval du convoyeur 1, en cas de blocage du flux 2 de récipients 3 sur le tronçon de convoyeur amont 4. A ce propos, ce recul du guide intermédiaire 8 peut intervenir soit simultanément, soit tout juste avant le basculement du volet 12.

En fin de compte, comme visible sur la figure 3, ce recul du guide intermédiaire 8 a pour but de décongestionner le flux 2 de récipients 3 et, plus particulièrement, de supprimer les contraintes imprimées sur le récipient 3a immédiatement bloqué sur l'extrémité 11 dudit guide intermédiaire 8 en vue, d'une part, de faciliter le basculement du volet 12 et éviter, d'autre part, de casser ce récipient 3a ou de provoquer sa chute.

Comme déjà indiqué plus haut, dans le cadre d'une nouvelle mise en couloirs 6₁, 6₂ ; 7₁, 7₂, d'un flux 2₁ ; 2₂ de récipients issus d'une première subdivision, le guide intermédiaire 8₁ ; 8₂ séparant ces nouveaux couloirs 6₁, 6₂ ; 7₁, 7₂ sur le tronçon de convoyeur aval 5₁ ; 5₂, comporte à son extrémité 11₁ ; 11₂ un volet 12₁ ; 12₂ dont on vient commander le basculement en cas de détection d'une interruption du flux de récipients dans ces couloirs 6₁, 6₂ ; 7₁, 7₂.

En conséquence, le convoyeur 1 sera muni de moyens de détection 14 ; 14₁ ; 14₂ d'interruption de flux de récipients, à chaque étape de mise en couloirs, donc à chaque fois qu'il s'agit de procéder à une subdivision d'un flux de récipients 2 ; 2₁ ; 2₂.

Par ailleurs, si chacun des volets 12, 12₁, 12₂ peut être prévu apte à être commandé, individuellement, sous l'impulsion de ces moyens de détection 14, 14₁, 14₂ qui leur sont associés, les moyens de commande de recul peuvent, eux, être prévus à même d'agir, simultanément, sur tous les guides intermédiaires 8, 8₁, 8₂. Ainsi, en cas de blocage d'un flux de récipients en amont d'une mise en couloirs, il est commandé le recul de tous les guides intermédiaires 8, 8₁, 8₂ suivant une course 15 en même temps ou juste avant qu'intervienne le basculement du volet 12 ou 12₁ ou 12₂ à l'avant duquel a lieu le blocage.

Comme cela ressort de la description qui précède, la présente invention vient répondre, de manière avantageuse et certaine au problème du risque inimitable du blocage d'un flux de récipients destiné à être mis en couloirs.

## Revendications

1. Convoyeur (1) de récipients (3), tels que bouteilles ou analogue ; pour leur mise en couloirs (6, 7 ; 6₁, 6₂ ; 7₁, 7₂) comportant des guides latéraux (9, 10 ; 9, 8 ; 8, 10) aptes à orienter lesdits récipients (3), acheminés en vrac depuis un tronçon de convoyeur amont (4 ; 6 ; 7) en direction d'un tronçon de convoyeur aval (5 ; 5₁ ; 5₂) subdivisé en deux couloirs (6, 7 ; 6₁, 6₂ ; 7₁, 7₂) par un guide intermédiaire (8 ; 8₁ ; 8₂), caractérisé par le fait que ledit guide intermédiaire (8 ; 8₁ ; 8₂) comporte, à son extrémité (11 ; 11₁ ; 11₂) orienté en direction du tronçon de convoyeur amont (4 ; 6; 7), un volet (12 ; 12₁ ; 12₂) monté pivotant autour d'un axe vertical (3) et commandé en rotation par des moyens de commande appropriés activés par l'intermédiaire de moyens de détection (14 ; 14₁; 14₂) d'interruption du flux de récipients (3) dans les couloirs (6, 7 ; 6₁, 6₂ ; 7₁, 7₂) en aval du volet (12 ; 12₁ ; 12₂).

2. Convoyeur selon la revendication 1, caractérisé par le fait qu'il comporte des moyens de commande de recul du guide intermédiaire (8 ; 8₁ ; 8₂) destinés à repousser ce dernier, selon une course (15), en aval du convoyeur (1) en cas de blocage du flux (2 ; 2₁ ; 2₂) de récipients (3) sur le tronçon de convoyeur amont (4 ; 6 ; 7), simultanément ou tout juste avant la commande de basculement du volet (12 ; 12₁ ; 12₂).

3. Convoyeur, selon l'une quelconque des revendications précédentes, pour assurer la mise en couloirs, en plusieurs étapes, d'un flux (2) de récipients (3) en provenance d'un tronçon de convoyeur amont (4) et comportant plusieurs guides intermédiaires (8 ; 8₁ ; 8₂) prévus aptes à subdiviser un flux (2 ; 2₁ ; 2₂) de récipients (3) dans deux couloirs, respectivement, (6, 7 ; 6₁, 6₂ ; 7₁, 7₂), caractérisé par le fait qu'il comporte des moyens de commande prévus aptes à commander, simultanément, le recul des guides intermédiaires (8 ; 8₁ ; 8₂) selon une course (15), en aval du convoyeur (1) en cas de blocage d'un flux quelconque (2 ; 2₁ ; 2₂) de récipients (3) en amont d'une mise en couloirs, en même temps ou juste avant qu'intervienne le basculement du volet (12 ; 12₁, 12₂) correspondant à l'un de ces guides intermédiaires (8, 8₁, 8₂) et à l'avant duquel à lieu le blocage.

4. Convoyeur selon la revendication 3, caractérisé par le fait qu'à chaque volet (12, 12₁, 12₂) sont associés des moyens de détection (14, 14₁, 14₂) prévus aptes à activer les moyens de commande du volet (12 ; 12₁ ; 12₂) correspondant, en cas de détection d'interruption du flux de récipients dans les couloirs, respectivement (6, 7 ; 6₁, 6₂, 7₁, 7₂) en aval dudit volet (12 ; 12₁ ; 12₂).

## Claims

1. Conveyor (1) for containers (3), such as bottles or the like, for putting them in lanes (6, 7 ; 6₁, 6₂ ; 7₁, 7₂) including side guides (9, 10 ; 9, 8 ; 8, 10) capable of orienting said containers (3), conveyed in bulk from an upstream conveyer segment (4 ; 6 ; 7) in the direction of a downstream conveyer segment (5 ; 5₁ ; 5₂) subdivided into two lanes (6, 7 ; 6₁, 6₂ ; 7₁, 7₂) by an intermediate guide (8 ; 8₁ ; 8₂), characterised in that said intermediate guide (8 ; 8₁ ; 8₂) includes, at its end (11 ; 11₁ ; 11₂) oriented in the direction of the upstream conveyer segment (4 ; 6 ; 7) a flap (12 ; 12₁ ; 12₂) pivotally mounted about a vertical spindle (3) and controlled in rotation by adequate control means activated through means (14 ; 14₁ ; 14₂) for detecting the interruption in the flow of containers (3) in the lanes (6, 7 ; 6₁, 6₂ ; 7₁, 7₂) downstream of the flap (12 ; 12₁ ; 12₂).

2. Conveyor according to claim 1, characterised in that it includes means for controlling the drawing back of the intermediate guide (8 ; 8₁ ; 8₂) aimed at pushing same back by a travel distance (15) downstream of the conveyor (1) in the event of a blocking of the flow (2 ; 2₁ ; 2₂) of containers (3) on the upstream conveyer segment (4 ; 6 ; 7), at the same time as or immediately before the control for the flap (12 ; 12₁ ; 12₂) to tilt.

3. Conveyor according to any of the preceding claims, for ensuring the putting into lanes, in several steps, of a flow (2) of containers (3) proceeding from an upstream conveyer segment (4) and including several intermediate guides (8 ; 8₁ ; 8₂) so designed as to be capable of subdividing a flow (2 ; 2₁ ; 2₂) of containers (3) into two lanes (6, 7 ; 6₁, 6₂ ; 7₁, 7₂), respectively, characterised in that it includes control means so designed as to be capable of simultaneously controlling the drawing back of the intermediate guides (8 ; 8₁ ; 8₂) by a travel distance (15) downstream of the conveyor (1) in the event of a blocking of a flow (2 ; 2₁ ; 2₂) of containers (3) upstream of a putting into lanes, at the same time as or immediately before the tilting of the flap (12 ; 12₁ ; 12₂) corresponding to one of these intermediate guides (8 ; 8₁ ; 8₂) occurs and at the front portion of which the blocking occurs.

4. Conveyor according to claim 3, characterised in that to each flap (12 ; 12₁ ; 12₂) are associated detecting (14 ; 14₁ ; 14₂) so designed as to be capable of activating the control means for the corresponding flap (12 ; 12₁ ; 12₂) in the event an interruption of the flow of containers in the lanes (6, 7 ; 6₁, 6₂ ; 7₁, 7₂), respectively, downstream of said flap (12 ; 12₁ ; 12₂) is detected.

## Patentansprüche

1. Transportvorrichtung (1) für Behälter (3), wie Flaschen oder dergleichen, zu ihrer Anordnung in Reihen (6, 7 ; 6₁, 6₂ ; 7₁, 7₂), die Seitenführungen (9, 10 ; 9, 8 ; 8, 10) umfassen, die geeignet sind, die genannten Behälter (3) zu richten, die durcheinander von einem stromaufwärtsen Transportvorrichtungabschnitt (4 ; 6 ; 7) in Richtung eines stromabwärtsen Transportvorrichtungabschnitts (5 ; 5₁ ; 5₂) gefördert werden, der durch einer Zwischenführung (8 ; 8₁ ; 8₂) in zwei Reihen (6, 7 ; 6₁, 6₂ ; 7₁, 7₂) aufgeteilt ist, dadurch gekennzeichnet, daß die genannte Zwischenführung (8 ; 8₁ ; 8₂) an ihrem dem stromaufwärtsen Transportvorrichtungabschnitt (4 ; 6 ; 7) zugewandten Ende (11 ; 11₁ ; 11₂) eine Klappe (12 ; 12₁ ; 12₂) umfaßt, die schwenkbar um eine lotrechte Spindel (3) montiert ist und deren Drehung durch geeignete Steuermittel gesteuert wird, die über Mittel (14 ; 14₁ ; 14₂) zum Detektieren der Unterbrechung im Strom von Behältern (3) in den Reihen (6, 7 ; 6₁, 6₂ ; 7₁, 7₂) stromabwärts der Klappe (12 ; 12₁ ; 12₂) erregt werden.

2. Transportvorrichtung nach Anspruch 1, dadurch gekennzeichnet, daß es Mittel zum Steuern des Rückzugs der Zwischenführung (8 ; 8₁ ; 8₂) umfaßt, um diese letzte um einen Abstand (15) stromabwärts der Transportvorrichtung (1) zurückzudrücken, im Falle einer Blockierung des Stroms (2 ; 2₁ ; 2₂) von Behältern (3) auf dem Transportvorrichtungabschnitt (4 ; 6 ; 7), gleichzeitig mit oder unmittelbar vor der Steuerung zur Kippung der Klappe (12 ; 12₁ ; 12₂).

3. Transportvorrichtung nach irgendeinem der vorgehenden Ansprüche, zur Sicherung der Anordnung in Reihen, in mehreren Stufen, eines Stroms (2) von Behältern (3), die von einem Transportvorrichtungabschnitt (4) kommen, und umfassend mehrere Zwischenführungen (8 ; 8₁ ; 8₂), die geeignet vorgesehen sind, einen Strom (2 ; 2₁ ; 2₂) von Behältern (3) in zwei Reihen, respektive (6, 7 ; 6₁, 6₂ ; 7₁, 7₂), aufzuteilen, dadurch gekennzeichnet, daß sie Steuermittel umfaßt, die geeignet vorgesehen sind, gleichzeitig den Rückzug der Zwischenführungen (8 ; 8₁ ; 8₂) um einen Abstand (15) stromabwärts der Transportvorrichtung (1) zu steuern, im Falle einer Blockierung eines Stroms (2 ; 2₁ ; 2₂) von Behältern (3) stromaufwärts einer Anordnung in Reihen, gleichzeitig oder unmittelbar vor dem Stattfinden der Kippung der einem dieser Zwischenführungen (8 ; 8₁ ; 8₂) entsprechenden Klappe (12 ; 12₁ ; 12₂), an deren Vorderteil die Blockierung stattfindet.

4. Transportvorrichtung nach Anspruch 3, dadurch gekennzeichnet, daß jeder Klappe (12 ; 12₁ ; 12₂) Detektormittel (14 ; 14₁ ; 14₂) zugeordnet sind, die geeignet vorgesehen sind, die Steuermittel für die entsprechende Klappe (12 ; 12₁ ; 12₂) zu erregnen, falls eine Unterbrechung des Stroms von Behältern in den Reihen, respektive (6, 7 ; 6₁, 6₂ ; 7₁, 7₂), stromabwärts der genannten Klappe (12 ; 12₁ ; 12₂) detektiert wird.
